# EUROPÄISCHE PATENTSCHRIFT

(11) **EP 0 995 566 B1**
(45) Veröffentlichungstag und Bekanntmachung des Hinweises auf die Patenterteilung: **18.09.2002**
(21) Anmeldenummer: 98121869.6
(22) Anmeldetag: 17.11.1998
(51) Int. Cl.: B29B 7/48, B29B 7/42, B30B 11/24, B29C 47/08, B29C 45/17

(54) **Maschine zum kontinuierlichen Bearbeiten von fliessfähigen Materialen**
Apparatus for continuous treatment of flowable material
Appareil pour le traitement continu de materiaux coulants

(30) Priorität: 13.10.1998 DE 19847102
(43) Veröffentlichungstag der Anmeldung: 26.04.2000
(73) Patentinhaber: Blach, Josef A., 74348 Lauffen (DE); Blach, Michael, 74348 Lauffen (DE); Blach, Markus, 74348 Lauffen (DE)
(72) Erfinder: Blach, Josef A., 74348 Lauffen (DE); Blach, Michael, 74348 Lauffen (DE); Blach, Markus, 74348 Lauffen (DE)
(74) Vertreter: Haft, von Puttkamer, Berngruber, Czybulka

(56) Entgegenhaltungen:
- EP-A- 0 422 272
- EP-A- 0 788 867
- US-A- 3 078 824
- US-A- 3 802 670
- PATENT ABSTRACTS OF JAPAN vol. 013, no. 577 (M-910), 20. Dezember 1989 (1989-12-20) & JP 01 241423 A (ISHIKAWAJIMA HARIMA HEAVY IND CO LTD), 26. September 1989 (1989-09-26)

## Beschreibung

Die Erfindung bezieht sich auf eine Maschine zum kontinuierlichen Bearbeiten von fließfähigen Materialien nach dem Oberbegriff des Anspruchs 1.

Eine derartige Maschine ist z.B. aus EP 0 788 867 A1 bekannt. Dabei sind in einem Raum in dem Gehäuse längs eines Kreises mehrere mit gleichem Zentriwinkelabstand angeordnete achsparallele, gleichsinnig angetriebene Wellen angeordnet, von denen eine Anzahl axial hintereinander angeordneter Schnekken- oder dergleichen Bearbeitungselemente trägt, mit denen benachbarte Wellen dicht kämmend inandergreifen, wobei das Gehäuse an der radial innen und außen liegenden Seite des Raumes mit achsparallelen, kreissegmentförmigen Rillen versehen ist, die die jeweilige Welle mit ihren Bearbeitungselementen aufnehmen und führen.

Der Flansch, an dem die Zuganker befestigt sind, wird durch eine Endplatte gebildet, die das Gehäuse an der dem Antriebsteil zugewandten Seite verschließt und durch die sich die Wellen zum Antriebsteil erstrecken. Damit ist gewährleistet, dass die erheblichen Zug- und Torsionskräfte, die beim Bearbeiten des fließfähigen Materials in dem Gehäuse auftreten, über das Gehäuse in das Antriebsteil fließen und von ihm aufgenommen werden. Der Gehäusemantel und die Endplatte müssen deshalb entsprechend massiv ausgebildet sein. Durch die Materialzufuhröffnung wird die Gehäusewand geschwächt. Demzufolge muss bei der bekannten Maschine die Öffnung entweder kleiner als gewünscht oder die Gehäusewand dicker ausgebildet werden. Neben dem größeren Herstellungsaufwand hat die dicke Gehäusewand zur Folge, dass der Energieaufwand zum Heizen und Kühlen zunimmt.

Das Material, das über die Materialzufuhröffnung zugegeben wird, weist im allgemeinen eine feste, pulverförmige Form auf. Es darf erst dann plastifizieren, wenn es von den Schneckenelementen aus dem Bereich der Materialzufuhröffnung heraus in den geschlossenen Gehäusebereich gefördert worden ist. Häufig ist es deshalb erforderlich, das Gehäuse im Bereich der Materialzufuhröffnung stark zu kühlen. Auch dem steht jedoch der dicke Gehäusemantel entgegen.

Nach DE 196 04 228 C1 ist es üblich, derartige Extruder mit Entgasungsöffnungen zu versehen. Ferner geht aus DE 39 37 612 A1 hervor, einen Extruder aus einzelnen Segmenten zusammenzusetzen, wobei ein Segment die Einlauföffnung aufweist.

Aufgabe der Erfindung ist es, ohne zusätzlichen Aufwand die Nachteile der dicken Gehäusewand der bekannten Maschine zu beseitigen.

Dies wird erfindungsgemäß dadurch erreicht, dass der Flansch, an dem das Antriebsteil mit Zugankern angreift, auf der der Materialaustrittsöffnung zugewandten Seite der Materialzufuhröffnung angeordnet ist. Das heißt, erfindungsgemäß befindet sich der Gehäuseabschnitt mit der Materialzutrittsöffnung zwischen dem Flansch und dem Antriebsteil. Damit fließen die Zugkräfte, die beim Bearbeiten des Materials in dem Gehäuse entstehen, über den Flansch unter Umgehung des Gehäuseabschnitts mit der Materialzufuhröffnung in das Antriebsteil. Vorzugsweise ist der Flansch zudem drehfest mit einem Gestell verbunden, an dem das Antriebsteil befestigt ist, um auch das Drehmoment, das im Gehäuse beim Bearbeiten des fließfähigen Materials auftritt, über den Flansch unter Umgehung des Gehäuseabschnitts mit der Materialzufuhröffnung in das Antriebsteil zu leiten.

Da an dem Gehäuseabschnitt mit der Materialzufuhröffnung bei der erfindungsgemäßen Maschine damit keine nennenswerten Axial- bzw. Torsionskräfte angreifen, kann dieser Abschnitt mit einer geringen Festigkeit ausgebildet und damit in unterschiedlichster Weise modifiziert werden.

So ist es möglich, die Wandstärke dieses Gehäuseabschnitts wesentlich zu verringern, beispielsweise mit der Folge, dass der Gehäuseabschnitt mit der Materialzufuhröffnung mit wesentlich weniger Energie wesentlich leichter gekühlt werden kann. Zudem kann die Kontaktfläche zwischen dem Gehäuseabschnitt mit der Materialzufuhröffnung und dem restlichen Gehäuse auf ein Minimum reduziert werden, wodurch der Gehäuseabschnitt mit der Materialzufuhröffnung gegenüber dem restlichen Gehäuse weitestgehend isoliert werden kann. Dies hat beispielsweise zur Folge, dass das restliche Gehäuse mit weniger Energie wesentlich leichter erhitzt werden kann.

Zudem kann die Materialzufuhröffnung praktisch beliebig groß ausgebildet werden. Auch können beliebig viele Materialzufuhröffnungen in diesem Abschnitt vorgesehen sein.

Die erfindungsgemäße Maschine kann als ein-, zwei- oder mehrwellige Maschine ausgebildet sein. Nach einer bevorzugten Ausführungsform ist sie jedoch entsprechend EP 0 788 867 A1 ausgebildet. Das heißt, das Gehäuse weist einen Raum auf, in dem längs eines Kreises mit gleichem Zentriwinkelabstand achsparallele, gleichsinnig angetriebene Wellen angeordnet sind, von denen jede eine Anzahl axial hintereinander angeordneter Schnecken- oder dergleichen Bearbeitungselemente trägt, mit denen benachbarte Wellen dicht kämmend ineinandergreifen, wobei das Gehäuse an der radial innen und außen liegenden Seite des Raumes mit achsparallelen konkaven, kreissegmentförmigen Rinnen versehen ist, die die jeweilige Welle mit ihren Bearbeitungselementen aufnehmen und führen.

Bei einer solchen Maschine wird das Material jedesmal, wenn es zwischen die Bearbeitungselemente zweier benachbarter Wellen gelangt, von der einen in die andere Richtung radial umgelenkt. Dies hat zur Folge, dass in dem Gehäuseabschnitt im Bereich der Materialzufuhröffnung, das feste pulverförmige Material von Luft und anderen Gasen oder flüchtigen Stoffen getrennt wird. Um die abgetrennten Gase zu entfernen, ist daher erfindungsgemäß vorzugsweise an dem Gehäuseabschnitt mit der Materialzutrittsöffnung wenigstens eine Gasaustrittsöffnung vorgesehen, an die eine Gasabsaugung angeschlossen sein kann. Somit können mit der erfindungsgemäßen Maschine auch sehr feinpulvrige leichte Materialien mit einem entsprechend hohen Luft- bzw. Gasanteil bearbeitet werden.

Nachstehend ist eine Ausführungsform der erfindungsgemäßen Maschine anhand der Zeichnung näher erläutert. Darin zeigen:
- Fig. 1: einen Längsschnitt durch die dem Antriebsteil zugewandten Teil der Maschine;
- Fig. 2: einen Schnitt entlang der Linie II-II nach Fig. 1 durch den Gehäuseabschnitt mit der Materialzufuhröffnung; und
- Fig. 3: einen der Fig. 2 entsprechenden Querschnitt durch eine Variante des Gehäuseabschnitts mit der Materialzufuhröffnung.

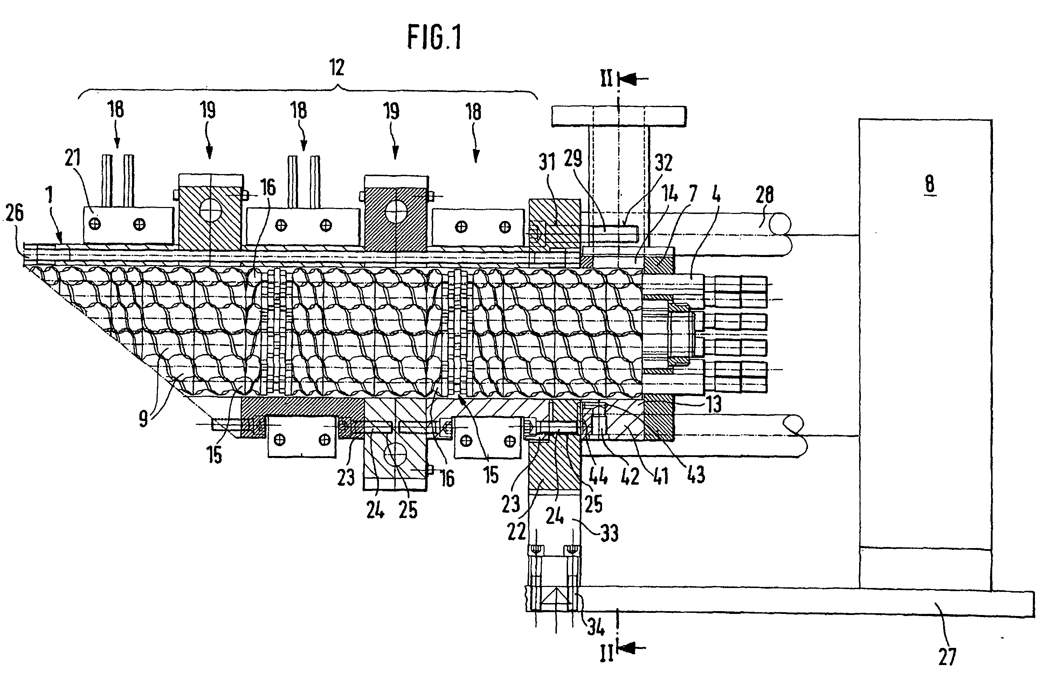

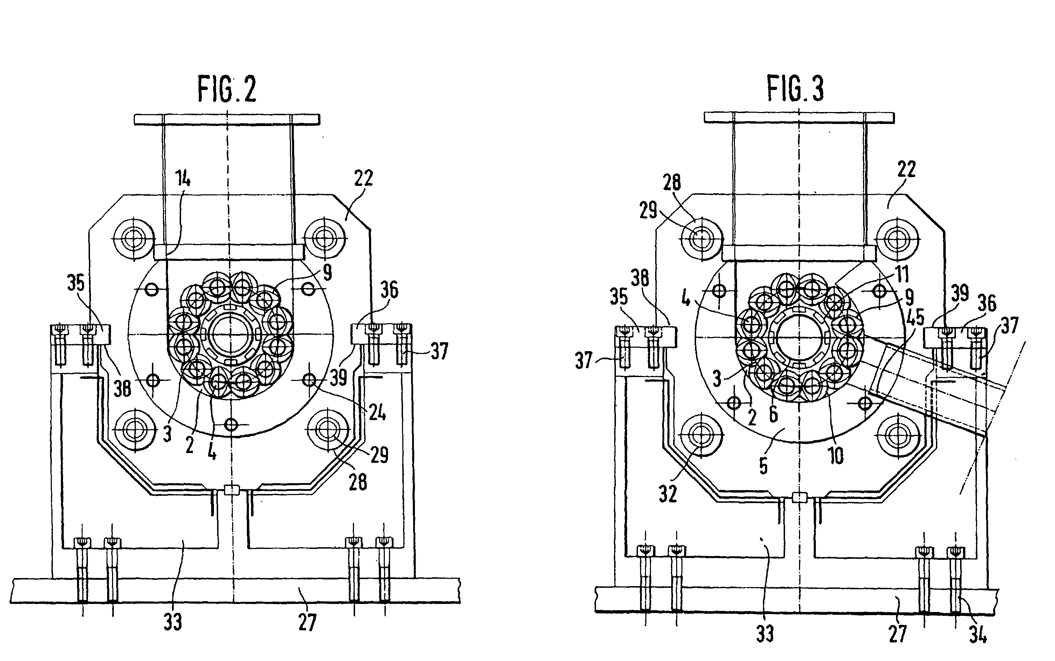

Gemäß Figur 1 und 2 weist die Maschine in einem Gehäuse 1 einen Raum 2 auf, der sich längs eines Kreises 3 erstreckt. In dem Raum 2 ist eine Vielzahl achsparalleler Wellen 4 angeordnet. Der Raum 2 erstreckt sich zwischen der Innenseite der Gehäusewand 5 und einem axialen Innenkern 6.

Das Gehäuse 1 ist an beiden Stirnseiten mit Endplatten verschlossen, wobei in der Zeichnung nur die eine Endplatte 7 an dem einen Gehäuseende zu sehen ist. Die sich durch die Platte 7 erstreckenden Wellen 4 werden von einem in Figur 1 schematisch dargestellten Antriebsteil 8 gleichsinnig angetrieben.

An jeder Welle 4 ist drehfest eine Vielzahl von Schneckenelementen 9 angeordnet. Wie Figur 2 zu entnehmen, greifen die Schneckenelemente 9 benachbarter Wellen kämmend mit geringem Spiel, also weitgehend dicht, ineinander.

Die Gehäusewand 5 ist an ihrer Innenseite und der Kern 6 an seiner Außenseite mit achsparallelen konkaven, kreissegmentförmigen Längsvertiefungen 10, 11 versehen, in die die Schneckenelemente 9 mit geringem Spiel, also weitgehend dicht, eingreifen.

Die Gehäusewand 5 besteht aus dem Hauptabschnitt 12 und einem als getrenntes ringförmiges Segment ausgebildeten Abschnitt 13, der an der Oberseite eine Materialzufuhröffnung 14 aufweist, durch die das (nicht dargestellte) zu bearbeitende Material dem Raum 2 zugeführt wird.

Die Wellen 4 erstrecken sich von der Endplatte 7 zur anderen Endplatte am anderen Gehäuseende, in der die (nicht dargestellte) Materialaustrittsöffnung vorgesehen ist. Die Maschine weist mehrere Knetzonen 15 auf, die durch Knetblöcke auf den Wellen 4 gebildet werden, wie sie beispielsweise aus EP 0 422 272 A1 bekannt sind. Materialaustrittsseitig zu den Knetblöcken können stauerzeugende Bearbeitungselemente 16 auf den Wellen 4 angeordnet sein. Wenn das zu bearbeitende Material ein festes thermoplastisches Material ist, beispielsweise ein Kunststoffgranulat, kann im Bereich der Knetzonen 15 eine Plastifizierung erfolgen.

Der Hauptabschnitt 12 der Gehäusewand 5 besteht aus langen und kurzen ringförmigen Gehäusesegmenten 18, 19. Die langen Gehäusesegmente 18 sind mit Heizkörpern 21 (oder gegebenenfalls Kühlkörpern) versehen. Die kurzen Gehäusesegmente 19 können beispielsweise Gasaustrittsöffnungen aufweisen, um flüchtige Bestandteile materialaustrittsseitig der Knetzonen 15 abzusaugen.

Zwischen dem Gehäusesegment 13 mit der Materialzufuhröffnung 14 und dem Hauptabschnitt 12 der Gehäusewand 5 ist am Gehäuse 1 ein Flansch 22 befestigt. Der Flansch 22 ist als separates ringförmiges Segment zwischen dem Gehäusesegment 13 mit der Materialzufuhröffnung 14 und dem ersten langen Gehäusesegment 18 angeordnet.

Die kurzen und langen Segmente 18, 19 sowie das Flanschsegment 22 können beispielsweise durch Flansche 23 an den Enden der langen Segmente 18 und Schrauben 24, die durch Löcher in den Flanschen 23 in Gewindebohrungen 25 in den kurzen Segmenten 19 bzw. dem Flanschsegment 22 geschraubt sind, zusammengehalten werden, wie in Figur 1 unten dargestellt, oder, wie in Figur 1 oben dargestellt, durch Zugstangen 26, die sich durch entsprechende Bohrungen in dem Gehäusewandabschnitt 12, also den langen und kurzen Segmenten 18, 19 erstrecken und an der nicht dargestellten Endplatte am materialaustrittsseitigen Ende des Gehäuses einerseits und an dem Flanschsegment 22 andererseits mit entsprechender Vorspannung angreifen.

Die erheblichen Zugkräfte, die insbesondere dadurch entstehen, dass das zu bearbeitende Material durch die Schnekkenelemente 9 gefördert, in den Knetzonen 15 mit den Stauelementen 16 verdichtet und schließlich durch die Materialaustrittsöffnung und gegebenenfalls ein Extrusionswerkzeug gepreßt wird, werden erfindungsgemäß über den Hauptabschnitt 12 der Gehäusewand 5 in den Flansch 22 und von dort in das Antriebsteil 8 geleitet, das auf einem Gestell 27 montiert ist. Dazu ist das Antriebsteil 8 durch Zuganker 28 mit dem Flansch 22 verbunden, wobei die Zuganker 28 am Flansch 22 durch Schrauben 29 befestigt sind, die sich durch Schraubenlöcher 31 in dem Flansch 22 erstrecken und in eine Gewindeaxialbohrung 32 in den Zugankern 28 geschraubt sind.

Um auch das Drehmoment aufzunehmen, das bei der Materialbearbeitung an der Gehäusewand 5 angreift, ist der Flansch 22 drehfest mit dem Gestell 27 verbunden. Gemäß Figur 2 ist der Flansch 22, der einen im wesentlichen rechteckigen bzw. prismenförmigen Umfang aufweist, dazu in einer entsprechend ausgebildeten Ausnehmung auf einem Ständer 33 befestigt, der mit Schrauben 34 auf dem Gestell 27 befestigt ist. An dem Ständer 33 sind auf gegenüberliegenden Seiten des Flansches 22 Keile 35, 36 mit Schrauben 37 befestigt, die in entsprechende Ausnehmungen 38, 39 im Umfang des Flansches 22 eingreifen.

Da die durch die Materialbearbeitung entstehenden Zugkräfte und Drehmomente von dem Flansch 22 in das Antriebsteil 8 bzw. das Gestell 27 geleitet werden, kann erfindungsgemäß das Gehäusesegment 13 mit der Materialzufuhröffnung 14 mit geringerer Festigkeit ausgebildet werden.

Demgemäß weist das Gehäusesegment 13 eine wesentlich geringere Wandstärke auf als die Gehäusewand 12 auf der anderen Seite des Flansches 22, die der Materialaustrittsöffnung zugewandt ist, d.h. die Gehäusesegmente 18, 19.

Das Gehäusesegment 13, das zudem mit einem Kühlkörper 41 versehen ist, dem das Kühlmittel über den Anschluss 42 zugeführt wird, ist damit mit geringem Energieaufwand kühlbar. Zudem ist die Kontaktfläche 43, mit der das Flanschsegment 22 das Gehäusesegment 13 berührt, sehr klein, d.h. nur so groß, dass der Raum 2 sicher abgedichtet wird, wodurch das Gehäusesegment 13 durch den Ringspalt 44, der zwischen dem Flanschsegment 22 und dem Gehäusesegment 13 gebildet wird, gegenüber dem Flanschsegment 22 und damit der durch die Heizkörper 21 erhitzten Gehäusewand 12 weitgehend isoliert wird. Der Ringspalt 44 kann zudem mit einem Wärmeisoliermaterial versehen werden.

Auch kann die Materialzufuhröffnung 14 groß ausgebildet werden, beispielsweise so breit wie der Außendurchmesser des Raumes 2 mit den Schneckenelementen 9 (Figur 2).

Das Gehäusesegment 13 kann zudem mit weiteren Öffnungen versehen werden, beispielsweise gemäß Figur 3 mit einer gegenüber der Materialzufuhröffnung 14 im Winkel versetzten Gasaustrittsöffnung 45, um Luft oder andere Gase aus dem pulverförmigen Material abzusaugen, das der Maschine über die Materialzufuhröffnung 14 zugeführt wird.

## Patentansprüche

1. Maschine zum kontinuierlichen Bearbeiten von fließfähigen Materialien mit wenigstens einer Welle (4) mit Schneckenoder dergleichen Bearbeitungselementen (9, 16) in einem Gehäuse (1), das an einem Ende wenigstens eine Materialzufuhröffnung (14) und am anderen Ende wenigstens eine Materialaustrittsöffnung aufweist, und mit einem Flansch (22) zur Befestigung eines Antriebsteils (8) mit Zugankern (28) am Gehäuse (1), **dadurch gekennzeichnet, dass** der Gehäuseabschnitt (13) mit der Materialzufuhröffnung (14) zwischen dem Flansch (22) und dem Antriebsteil (8) angeordnet ist.

2. Maschine nach Anspruch 1, **dadurch gekennzeichnet, dass** der Gehäuseabschnitt (13) mit der Materialzufuhröffnung (14) als getrenntes Segment ausgebildet ist.

3. Maschine nach Anspruch 1 oder 2, **dadurch gekennzeichnet, dass** der Flansch (22) ein getrenntes Segment zwischen dem Gehäuseabschnitt (13) mit der Materialzutrittsöffnung (14) und dem Gehäuseabschnitt (12) auf dem der Materialaustrittsöffnung zugewandten Seite bildet.

4. Maschine nach einem der vorstehenden Ansprüche, **dadurch gekennzeichnet, daß** der Flansch (22) drehfest mit einem Gestell (27) verbunden ist.

5. Maschine nach Anspruch 4, **dadurch gekennzeichnet, dass** auf dem Gestell (27) das Antriebsteil (8) befestigt ist.

6. Maschine nach Anspruch 5, **dadurch gekennzeichnet, dass** zur drehfesten Verbindung des Flansches (22) mit dem Gestell (27) auf dem Gestell (27) ein Ständer (33) befestigt ist, der Keile (35, 36) aufweist, die in Ausnehmungen (38, 39) am umfang des Flansches (22) eingreifen.

7. Maschine nach einem der vorstehenden Ansprüche **dadurch gekennzeichnet, dass** die Umfangswand des Gehäuseabschnitts (13) mit der Materialaustrittsöffnung (14) eine geringere Wandstärke aufweist als die Gehäusewand (12) auf der der Materialaustrittsöffnung zugewandten Seite des Flansches (22).

8. Maschine nach einem der vorstehenden Ansprüche, **dadurch gekennzeichnet, dass** der Gehäuseabschnitt (13) mit der Materialzufuhröffnung (14) mit einer Kühlung versehen ist.

9. Maschine nach einem der vorstehenden Ansprüche, **dadurch gekennzeichnet, dass** in einem Raum (2) in dem Gehäuse (1) längs eines Kreises (3) mehrere mit gleichem Zentriwinkelabstand angeordnete achsparallele Wellen (4) derart angeordnet sind, dass benachbarte Schnecken- oder dergleichen Bearbeitungselemente (9, 15, 16) dichtkämmend ineinandergreifen, und der Gehäuseabschnitt (13) mit der Materialzufuhröffnung (14) mit wenigstens einer Gasaustrittsöffnung (45) versehen ist.

10. Maschine nach einem der vorstehenden Ansprüche, **dadurch gekennzeichnet, dass** der Flansch (22) über Zugstangen (26) mit dem Gehäuseende mit der Materialaustrittsöffnung verbunden ist.

## Claims

1. A machine for continuous processing of flowable materials having at least one shaft (4) with worm or similar processing elements (9,16) in a housing (1) having at least one material inlet (14) at one end and at least one material outlet at the other end, and a flange (22) for fastening a driving member (8) with tension rods (28) of the housing (1), **characterized in that** the housing portion (13) with the material inlet (14) is disposed between the flange (22) and the driving member (8).

2. The machine of claim 1, **characterized in that** the housing portion (13) with the material inlet (14) is formed as a separate segment.

3. The machine of claim 1 or 2, **characterized in that** the flange (22) forms a separate segment between the housing portion (13) with the material inlet (14) and the housing portion (12) on the side facing the material outlet.

4. The machine of any of the above claims, **characterized in that** the flange (22) is connected with a frame (27) so as to rotate in unison.

5. The machine of claim 4, **characterized in that** the driving member (8) is fastened to the frame (27).

6. The machine of claim 5, **characterized in that** a pillar (33) is fastened to the frame 27) for connecting the flange (22) with the frame (27) so as to rotate in unison, said pillar (33) having wedges (35, 36) which engage recesses (38, 39) on the circumference of the flange (22).

7. The machine of any of the above claims, **characterized in that** the circumferential wall of the housing portion (13) with the material inlet (14) has a smaller wall thickness than the housing wall (12) on the side of the flange (22) facing the material outlet.

8. The machine of any of the above claims, **characterized in that** the housing portion (13) with the material inlet (14) is provided with cooling means.

9. The machine of any of the above claims, **characterized in that** a plurality of axis-parallel shafts (4) disposed at the same central-angle distance are disposed in a space (2) in the housing (1) along a circle (3) in such a way that adjacent worm or similar processing elements (9, 15, 16) intermesh tightly, and the housing portion (13) with the material inlet (14) is provided with at least one gas outlet (45).

10. The machine of any of the above claims, **characterized in that** the flange (22) is connected with the housing end with the material outlet via pull rods (26).

## Revendications

1. Machine pour le traitement continu de matières coulantes, comportant au moins un arbre (4) avec éléments à vis sans fin ou éléments de traitement (9, 16) similaires dans un boîtier (1) qui présente à une extrémité au moins un orifice d'amenée (14) de matière et à l'autre extrémité au moins un orifice de sortie de matière, et comportant une bride (22) pour fixer une pièce d'entraînement (8) avec des tirants d'ancrage (28) sur le boîtier (1), **caractérisée en ce que** le tronçon de boîtier (13) comportant l'orifice d'amenée (14) de matière est agencé entre la bride (22) et la pièce d'entraînement (8).

2. Machine selon la revendication 1, **caractérisée en ce que** le tronçon de boîtier (13) comportant l'orifice d'amenée (14) de matière est réalisé sous forme de segment séparé.

3. Machine selon la revendication 1 ou 2, **caractérisée en ce que** la bride (22) forme un segment séparé entre le tronçon de boîtier (13) comportant l'orifice d'amenée (14) de matière et le tronçon de boîtier (12) sur le côté tourné vers l'orifice de sortie de matière.

4. Machine selon l'une des revendications précédentes, **caractérisée en ce que** la bride (22) est reliée solidaire en rotation avec un bâti (27).

5. Machine selon la revendication 4, **caractérisée en ce que** la pièce d'entraînement (8) est fixée sur le bâti (27).

6. Machine selon la revendication 5, **caractérisée en ce que** pour relier la bride (22) solidaire en rotation avec le bâti (27), un montant (33) est fixé sur le bâti (27) et présente des clavettes (35, 36) qui s'engagent dans des évidements (38, 39) sur la périphérie de la bride (22).

7. Machine selon l'une des revendications précédentes, **caractérisée en ce que** la paroi périphérique du tronçon de boîtier (13) comportant l'orifice d'amenée (14) de matière présente une épaisseur de paroi plus faible que la paroi de boîtier (12) sur le côté de la bride (22), qui est tourné vers l'orifice de sortie de matière.

8. Machine selon l'une des revendications précédentes, **caractérisée en ce que** le tronçon de boîtier (13) comportant l'orifice d'amenée (14) de matière est pourvu d'un système de refroidissement.

9. Machine selon l'une des revendications précédentes, **caractérisée en ce que** plusieurs arbres (4) parallèles à l'axe sont agencés avec la même distance d'angle au centre dans un espace (2) dans le boîtier (1), le long d'un cercle (3), de telle sorte que des éléments à vis sans fin ou des éléments de traitement (9, 15, 16) similaires voisins s'engrènent étroitement les uns dans les autres, et **en ce que** le tronçon de boîtier (13) comportant l'orifice d'amenée (14) de matière est pourvu d'au moins un orifice de sortie de gaz (45).

10. Machine selon l'une des revendications précédentes, **caractérisée en ce que** la bride (22) est reliée par des tiges de traction (26) avec l'extrémité de boîtier comportant l'orifice de sortie de matière.
